# EUROPÄISCHE PATENTSCHRIFT

(11) **EP 0 398 181 B1**
(45) Veröffentlichungstag und Bekanntmachung des Hinweises auf die Patenterteilung: **14.08.1996**
(21) Anmeldenummer: 90108920.1
(22) Anmeldetag: 11.05.1990
(51) Int. Cl.: H04B 10/10

(54) **Vorrichtung zur Übertragung eines optischen Signals**
Apparatus for the transmission of an optical signal
Dispositif de transmission de signal optique

(30) Priorität: 17.05.1989 DE 3915977
(43) Veröffentlichungstag der Anmeldung: 22.11.1990
(73) Patentinhaber: Alcatel SEL Aktiengesellschaft, D-70435 Stuttgart (DE); ALCATEL N.V., NL-1077 XX Amsterdam (NL)
(72) Erfinder: Mozer, Albrecht, Dr., D-7120 Bietigheim (DE)
(74) Vertreter: Pohl, Herbert, Dipl.-Ing

(56) Entgegenhaltungen:
- PATENT ABSTRACTS OF JAPAN vol. 9, no. 321 (E-367)(2044) 17. Dezember 1985 & JP-A-60 153 239 ( MITSUBISHI ) 12. August 1985
- PATENT ABSTRACTS OF JAPAN vol. 6, no. 234 (E-143)(1112) 20. November 1982 & JP-A-57 035 534 ( NIPPON ) 21. August 1982
- PATENT ABSTRACTS OF JAPAN vol. 8, no. 194 (E-264)(1631) 6. September 1984 & JP-A-59 081 935 ( MITSUBISHI ) 11. Mai 1984
- PATENT ABSTRACTS OF JAPAN vol. 7, no. 264 (E-212)(1409) 24. November 1983 & JP-A-58 146 150 ( FUJITSU ) 31. August 1983

## Beschreibung

Die Erfindung betrifft eine Vorrichtung zur Übertragung eines optischen Signales gemäß dem Oberbegriff des Anspruchs 1.

Bekannte Kommunikationsnetze wie das Breitband-ISDN Netz (Broadband Integrated Services Digital Network) ermöglichen die Betreibung unterschiedlicher Endgeräte, wie Fernsprech-, Bildfernsprech-, Telex-, Telefax-, Fernseh- und Radiogeräte sowie andere Datenübertragungsgeräte, über nur einen Lichtwellenleiteranschluß. Hierzu ist aus der Zeitschrift "Elektrisches Nachrichtenwesen" Band 60, Nr. 1, 1986, Seiten 40 bis 44 ein Hauskommunikationssystem bekannt, das die Verbindung zwischen dem öffentlichen Fernmeldenetz und den Endgeräten darstellt. In der bekannten Schrift werden unterschiedliche Netzwerktopologien beschrieben, die allesamt einen Punkt gemeinsam aufweisen, nämlich daß sie verkabelt sind.

Der Nachteil beim Stand der Technik liegt nun darin, daß schon bei der Planung des Hausnetzes die Anzahl und die Lage der Endgeräte bekannt sein muß, wenn man nachträgliche bauliche Veränderungen bezüglich der Lichtwellenleiter vermeiden will.

Aus dem Patent Abstract of Japan JP-A-60153239 ist ein optisches Kommunikationssystem bekannt, bei dem optische Fasern über jeweils eine Zwischenstation mit in einzelnen Räumen befindlichen Sendern und Empfängern verbunden sind. Die optischen Signale werden jeweils zwischen der Zwischenstation und den im Raum befindlichen Sendern und Empfängern durch den Raum übertragen. Eine Zwischenstation enthält hierfür einerseits Sende- und Empfangseinrichtungen für die Übertragung von optischen Signalen in Richtung der optischen Faser und andererseits Sende- und Empfangseinrichtungen zur Übertragung in Richtung des Raumes. Die Sender und Empfänger im Raum sind eingerichtet, um die durch den Raum übertragenen optischen Signale zu empfangen oder solche auszusenden.

Aus dem Patent Abstract of Japan JP-A-57135534 ist ein bidirektionales System mit zwei Stationen zum Übertragen von Licht durch den Raum bekannt. Jede Station weist hierzu einen optischen Koppler auf, der einerseits mit einem Sender und Emfpänger und andererseits mit einer Linse verbunden ist. Die Linse ist mit dem Koppler derart verbunden, daß der Brennpunkt der Linse auf die Stirnseite einer optischen Faser fokusiert ist, die mit dem Koppler verbunden ist. Die beiden Linsen der beiden Stationen sind derart zueinander angeordnet, daß Licht vom optischen Koppler der einen Station her kommend in den Koppler der anderen Station fokusiert wird. Ein solches System hat den Nachteil, daß die beiden Stationen stets zueinander justiert angeordnet sein müssen.

Der Erfindung liegt nun die Aufgabe zugrunde, eine Verbindung zwischen dem Hausnetz und den Endgeräten zu schaffen, die eine flexible Aufstellung bezüglich der Anzahl und dem Standort von Endgeräten ermöglicht.

Die Aufgabe wird bei einer gattungsgemäße Vorrichtung durch die kennzeichnenden Merkmale des Anspruchs 1 gelöst. Weitere Ausgestaltungen der Erfindung sind den übrigen Ansprüchen und dem Rest der Beschreibung zu entnehmen.

Mehrere Ausführungsbeispiele der Erfindung sind in den Figuren 1 bis 5 abgebildet und im folgenden näher beschrieben. Es zeigen:
- Fig. 1: eine schematische Abbildung einer Hausverteileranlage mit der Schnittstelle zum Fernmeldenetz,
- Fig. 2: ein erstes Ausführungsbeispiel eines Kopplers mit einer Linse,
- Fig. 3: ein zweites Ausführungsbeispiel eines Kopplers mit einem losen Stück Lichtwellenleiter,
- Fig. 4: ein drittes Ausführungsbeispiel nach Fig. 2 mit einer zusätzlichen Verstärkereinrichtung,
- Fig. 5: ein viertes Ausführungsbeispiel nach Fig. 3 mit einer zusätzlichen Verstärkereinrichtung.

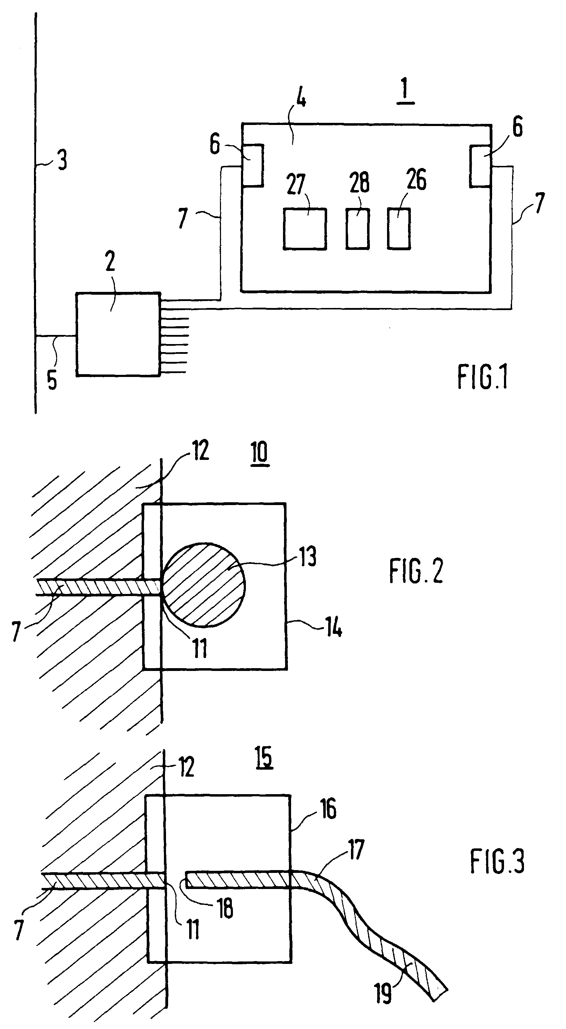

Eine in Fig. 1 abgebildete Hausverteileranlage 1 weist einen Breitbandnetzanschluß 2 auf, der die Schnittstelle zwischen der Hausverteileranlage 1 und dem breitbandigen Fernmeldenetz 3 darstellt.

Von dem breitbandigen Fernmeldenetz 3 ist hier lediglich eine Anschlußleitung 3 abgebildet, die als Lichtwellenleiter ausgebildet ist und über die die Nachrichten bidirektional übertragen werden. Ferner ist ein Anschlußleiter 5 zur Hausverteileranlage 1 abgebildet, auf dem die Nachrichten ebenfalls bidirektional übertragen werden.

Die Hausverteileranlage 1 befindet sich in einem Haus, einer Wohnung oder einem Büro, wobei in der Fig. 1 nur ein Raum 4 abgebildet ist, in dem sich beispielsweise drei Teilnehmerendgeräte, ein Stereoradiogerät 26, ein Bildfernsprechgerät 27 und ein Fernsehgerät 28 befinden, die an die Hausverteileranlage angeschlossen sind.

Die Netzwerkstruktur der in Fig. 1 abgebildeten Hausverteileranlage weist eine Sternstruktur auf, bei der Lichtwellenleiter 7 jeweils in einem Koppler 6 enden. Der Nachrichtenweg von der Hausverteileranlage 1 zu den Teilnehmerendgeräten 26, 27, 28 erfolgt über die Koppler 6, die auf der einen Seite mit dem Lichtwellenleiter 7 verbunden sind und auf der anderen Seite ein optisches Element zum Streuen der durch den Wellenleiter 7 einfallenden Nachrichtensignale in den Raum 4, in dem er angebracht ist, aufweisen. In den Räumen, in denen Teilnehmerendgeräte 26, 27, 28 aufgestellt sind, befindet sich eine bestimmte, von der Raumgröße und Raumgeometrie abhängige und von der Anzahl der Teilnehmerendgeräte unabhängige Anzahl von Kopplern 6. Um eine Unterbrechung der Nachrichtenübertragung zu verhindern, wenn sich z.B. eine Person zwischen einem Koppler 6 und einem der Teilnehmerendgeräte 26, 27, 28 befindet, ist sinnvollerweise wenigstens ein zweiter Koppler 6 auf der gegenüberliegenden Wand angeordnet. Die Teilnehmerendgeräte 26, 27, 28 weisen zur Aufnahme dieser gestreuten Nachrichtensignale jeweils geeignete Empfangsvorrichtungen auf.

In Fig. 2 ist ein erstes Ausführungsbeispiel eines Kopplers 10 abgebildet. Er besteht aus dem Ende 11 eines fest verlegten Lichtwellenleiters 7, an oder auf dessen Stirnseite eine Linse 13 angeordnet ist. Der Lichtwellenleiter 7 ist in oder auf der Wand 12 verlegt, sein Ende 11 ragt aus der Wand 12 heraus. Die Linse 13 ist Bestandteil eines Moduls 14, mit dem das Ende 11 des Lichtwellenleiters 7 verbunden ist. Das Modul 14 ist hierzu vorteilhafterweise zweiteilig ausgebildet. Der erste Teil I ist fest mit der Wand 12 verbunden, der zweite Teil II enthält die Linse 13 und ist mit dem ersten Teil I z.B. durch Aufstecken verbindbar.

Die optischen Nachrichtensignale treten aus dem Lichtwellenleiter 7 aus und werden durch die Linse 13 hindurch in den Raum 4 gestreut. Das gestreute Licht wird bei einer zentrisch zu dem Kern des Lichtwellenleiters 7 angeordneten Linse 13 homogen in den Raum 4 gestreut. Durch eine nicht zentrische Anordnung der Linse 13 bezüglich des Kerns des Lichtwellenleiters 7 kann der Streuwinkel des gestreuten Lichts in bekannter Weise verändert werden. Dabei ist es vorteilhaft, die Linse 13 bezüglich des Kerns vom Lichtwellenleiter 7 drehbar anzuordnen, was durch eine zylindrische Ausgestaltung des Moduls 14 erreicht wird, bei dem der erste Teil I gegenüber dem zweiten Teil II verdreht werden kann.

In Fig. 3 ist ein zweites Ausführungsbeispiel eines Kopplers 15 abgebildet, der sich von dem des ersten Ausführungsbeispieles in der Ausgestaltung des Moduls unterscheidet. Er weist ebenfalls ein zweiteiliges Modul 16 auf, dessen erster Teil I fest mit der Wand 12 verbunden ist. Mit dem zweiten Teil II ist ein loses Stück Lichtwellenleiter 17 verbunden, das an der Mantelfläche hohe Streuverluste aufweist. Die hohen Streuverluste können z.B. durch Einkerben des Mantels, oder durch Anätzen erreicht werden. Das eine Ende 18 des losen Stücks Lichtwellenleiter 17 ist zentrisch und in Verlängerung zu dem Ende 11 des Lichtwellenleiters 7 angeordnet und an dem zweiten Teil II des Moduls 16 befestigt. Die beiden Enden 11 und 18 sind günstigerweise durch eine Faserhülse zueinander zentriert (nicht abgebildet). Das andere Ende 19 des losen Stücks Lichtwellenleiter 17 ragt aus dem Modul 16 heraustretend in den Raum 4. Es hat vorteilhafterweise, je nach dem Streugehalt der verwendeten Faser eine Länge zwischen 5 und 50 cm.

Die Koppler 10 und 15 finden hauptsächlich dann ihre Anwendung, wenn ein optisches Nachrichtensignal mit hoher Leistung vorliegt und/oder wenn der Abstand zwischen dem Modul und den Teilnehmerendgeräten 26, 27, 28 gering ist. Für andere Fälle sind die beiden nächsten, nachfolgend erläuterten Ausführungsbeispiele von Vorteil.

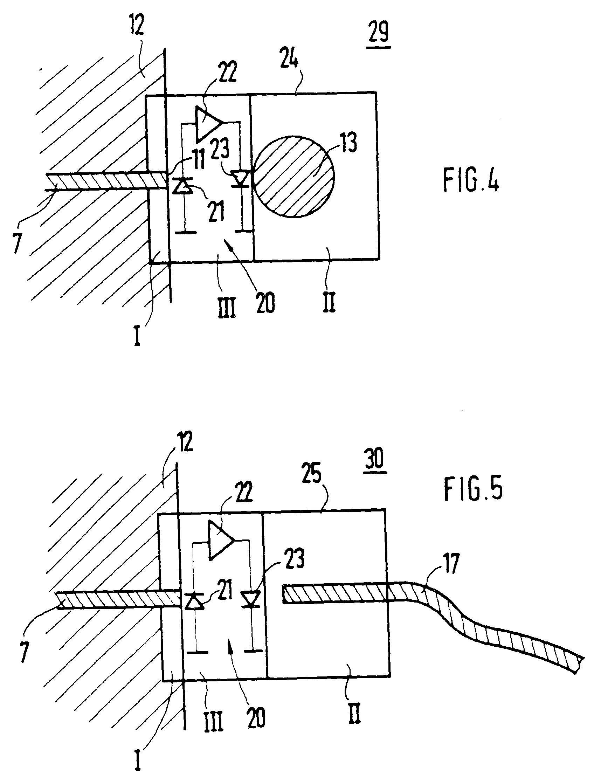

Das in Fig. 4 abgebildete dritte Ausführungsbeispiel eines Kopplers 29 weist gegenüber dem des ersten Ausführungsbeispiels ein größeres Modul 24 auf, in dem zwischen dem Ende 11 des Lichtwellenleiters 7 und der Linse 13 eine Verstärkereinrichtung 20, bestehend aus einem Empfänger 21 zur Wandlung des optischen Signales in ein elektrisches Signal, einem elektronischen Verstärker 22, zur Verstärkung dieses elektrischen Signales und einem optischen Sender 23, zur Rückgewinnung des optischen Signales angeordnet ist. Die Verstärkung des Signals muß nicht zwangsläufig elektrisch erfolgen. Es kann durchaus mittels eines Halbleiterverstärkers oder Faserverstärkers ein direkter rein optischer Verstärker angeordnet werden (keine Abbildung). In diesem Falle entfallen der Empfänger 21, der elektronische Verstärker 22 und der optische Sender 23.

Das Modul 24 ist dreiteilig ausgebildet. Es besteht, wie das Modul 14, aus einem ersten, fest mit der Wand 12 verbundenen Teil I und aus einem zweiten, die Linse 13 aufnehmenden Teil II. Weiter ist ein dritter Teil III, der zwischen dem ersten I und dem zweiten Teil II angeordnet ist, zur Aufnahme der Verstärkereinrichtung 20 vorhanden.

Das in Fig. 5 abgebildete vierte Ausführungsbeispiel eines Kopplers 30 weist gegenüber dem des zweiten Ausführungsbeispiels ebenfalls, wie im dritten Ausführungsbeispiel beschrieben, zusätzlich eine in einem dreiteiligen Modul 25 befindliche Verstärkereinrichtung 20 auf.

Bei der Gestaltung der Module 14, 16, 24 und 25 ist es nicht notwendig, aber vorteilhaft, die Module 14 und 15 zweiteilig, entsprechend die Module 24 und 25 dreiteilig auszubilden. Der Vorteil liegt darin, daß bei kompatibler Ausgestaltung der Module 14, 16, 24 und 25 der zweite Teil II des Moduls 14 oder des Moduls 16, und wenn eine hohe Leistung des Nachrichtensignals erwünscht ist, auch der dritte Teil III der Module 24 und 25 mit dem ersten Modulteil I, je nach Bedürfnis verbunden werden können. Bei der Verwendung des dritten Modulteils III ist es erforderlich, dem Modul auch den zweiten Teil II hinzuzufügen.

Wenn das mit der Verstärkereinrichtung 20 versehene dritte Teil angeordnet wird, ist es notwendig, diese Verstärkereinrichtung 20 mit Strom zu versorgen. Hierzu kann der erste, mit der Wand 12 fest verbundene Teil als Steckdose ausgebildet werden, in der sich das Ende 11 des Lichtwellenleiters 7 und zusätzlich ein Anschluß zum elektrischen Netz des Hauses (keine Abbildung) befindet. Die elektrischen Komponenten der Verstärkereinrichtung 20 werden somit direkt mit dem elektrischen Netz verbunden.

Für eine bidirektionale Nachrichtenübertragung eignet sich besonders das dritte und vierte Ausführungsbeispiel. Hierbei muß die Verstärkereinrichtung 20 mit einem Empfänger 21 versehen sein, der auch als Sender arbeiten kann und muß analog mit einem Sender 23 versehen sein, der auch als Empfänger arbeiten kann. Bei der bidirektionalen Übertragung wird der Sender kurzzeitig als Empfänger und der Empfänger kurzzeitig als Sender geschaltet.

Entsprechend sind die Teilnehmerendgeräte 26, 27, 28 ausgerüstet. Als weitere Form der bidirektionalen Übertragung kann die Übertragung in den unterschiedlichen Richtungen gleichzeitig aber mit unterschiedlichen Trägerfrequenzen erfolgen.

## Patentansprüche

1. Vorrichtung zur Übertragung eines optischen Signals in einer Hausverteileranlage,
bei der das Signal zwischen einem Lichtwellenleiter (7) und wenigstens einem Endgerät (26, 27, 28) optisch durch den Raum übertragbar ist und
bei der das Endgerät (26, 27, 28) einen Empfänger zur Aufnahme des durch den Raum übertragenen Signals aufweist,
**dadurch gekennzeichnet**, daß der Lichtwellenleiter (7) fest installiert ist und am Ende einen Koppler (6, 10, 15, 29, 30) zur Streuung des optischen Signals aufweist.

2. Vorrichtung zur Übertragung eines optischen Signals in einer Hausverteileranlage,
bei der das Signal zwischen einem Lichtwellenleiter (7) und wenigstens einem Endgerät (26, 27, 28) optisch durch den Raum übertragbar ist und
bei der das Endgerät (26, 27, 28) einen Sender zum Senden des durch den Raum übertragenen Signals aufweist,
**dadurch gekennzeichnet**, daß der Lichtwellenleiter (7) fest installiert ist und am Ende einen Koppler (6, 10, 15, 29, 30) zur Einkoppelung des optischen Signals aufweist, das aus unterschiedlichen Richtungen einstrahlbar ist.

3. Vorrichtung nach Anspruch 1 oder 2, dadurch gekennzeichnet, daß der Koppler (10) eine Linse (13) aufweist.

4. Vorrichtung nach Anspruch 1, dadurch gekennzeichnet, daß der Koppler (15) ein loses Stück Lichtwellenleiter (17) ist, das hohe Streuwerte aufweist.

5. Vorrichtung nach Anspruch 1 oder 2, dadurch gekennzeichnet, daß der Koppler (10, 15, 29, 30) Teil eines mit dem Ende (11) des Lichtwellenleiters (7) steckbar verbindlichen Moduls (14, 16, 24, 25) ist.

6. Vorrichtung nach Anspruch 5, dadurch gekennzeichnet, daß das Ende (11) des Lichtwellenleiters (7) in einer Steckdose angeordnet ist.

7. Vorrichtung nach Anspruch 6, dadurch gekennzeichnet, daß in dem Modul (24, 25) eine Verstärkereinrichtung (20) zur Verstärkung des optischen Signales angeordnet ist.

8. Vorrichtung nach Anspruch 7, dadurch gekennzeichnet, daß die Verstärkereinrichtung (20) einen Empfänger (21), einen elektronischen Verstärker (22) und einen optischen Sender (23) aufweist.

9. Vorrichtung nach Anspruch 7, dadurch gekennzeichnet, daß die Steckdose einen Elektroanschluß zur Versorgung der Verstärkereinrichtung (20) aufweist.

10. Vorrichtung nach Anspruch 8, dadurch gekennzeichnet, daß der Empfänger (21) und der optische Sender (23) der Verstärkereinrichtung (20) alternativ als Empfänger und optischer Sender betreibbar sind.

11. Vorrichtung nach Anspruch 1 oder 2, dadurch gekennzeichnet, daß die optischen Signale bidirektional übertragen werden.

## Claims

1. Apparatus for the transmission of an optical signal in a domestic distribution system,
in which the signal can be transmitted optically through the room between an optical waveguide (7) and at least one terminal (26, 27, 28), and
in which the terminal (26, 27, 28) has a receiver for receiving the signal transmitted through the room,
characterized in that the optical waveguide (7) is permanently installed and has a coupler (6, 10, 15, 29, 30) at the end for scattering the optical signal.

2. Apparatus for the transmission of an optical signal in a domestic distribution installation,
in which the signal can be transmitted optically through the room between an optical waveguide (7) and at least one terminal (26, 27, 28), and
in which the terminal (26, 27, 28) has a transmitter for transmitting the signal transmitted through the room,
characterized in that the optical waveguide (7) is permanently installed and has a coupler (6, 10, 15, 29, 30) at the end for launching the optical signal, which can be radiated in from different directions.

3. Apparatus according to Claim 1 or 2, characterized in that the coupler (10) has a lens (13).

4. Apparatus according to Claim 1, characterized in that the coupler (15) is a separate piece of optical waveguide (17) which has high scattering values.

5. Apparatus according to Claim 1 or 2, characterized in that the coupler (10, 15, 29, 30) is part of a module (14, 16, 24, 25) which can be pluggably connected to the end (11) of the optical waveguide (7).

6. Apparatus according to Claim 5, characterized in that the end (11) of the optical waveguide (7) is disposed in a socket.

7. Apparatus according to Claim 6, characterized in that an amplifier device (20) for amplifying the optical signal is disposed in the module (24, 25).

8. Apparatus according to Claim 7, characterized in that the amplifier device (20) has a receiver (21), an electronic amplifier (22) and an optical transmitter (23).

9. Apparatus according to Claim 7, characterized in that the socket has an electrical connection for supplying the amplifier device (20).

10. Apparatus according to Claim 8, characterized in that the receiver (21) and the optical transmitter (23) of the amplifier device (20) can be operated alternatively as receiver and as optical transmitter.

11. Apparatus according to Claim 1 or 2, characterized in that the optical signals are transmitted bidirectionally.

## Revendications

1. Dispositif de transmission d'un signal optique dans une installation de répartition privée, dans lequel le signal peut être transmis optiquement à travers la pièce entre une fibre optique (7) et au moins un terminal (26, 27, 28) et dans lequel le terminal (26, 27, 28) présente un récepteur pour la réception du signal transmis à travers la pièce, caractérisé en ce que la fibre optique (7) est posée de manière fixe et possède à l'extrémité un coupleur (6, 10, 15, 29, 30) pour la diffusion du signal optique.

2. Dispositif de transmission d'un signal optique dans une installation de répartition privée, dans lequel le signal peut être transmis optiquement à travers la pièce entre une fibre optique (7) et au moins un terminal (26, 27, 28), et dans lequel le terminal (26, 27, 28) possède un émetteur pour l'émission du signal transmis à travers la pièce, caractérisé en ce que la fibre optique (7) est posée de manière fixe et présente à l'extrémité un coupleur (6, 10, 15, 29, 30) pour le couplage du signal optique, lequel peut être émis depuis des directions différentes.

3. Dispositif suivant la revendication 1 ou 2, caractérisé en ce que le coupleur (10) présente une lentille (13).

4. Dispositif suivant la revendication 1, caractérisé en ce que le coupleur (15) est une portion lâche de fibre optique (17), qui présente des valeurs de diffusion élevées.

5. Dispositif suivant la revendication 1 ou 2, caractérisée en ce que le coupleur (10, 15, 29, 30) est une partie d'un module (14, 16, 24, 25) pouvant être raccordé par enfichage à l'extrémité (11) de la fibre optique (7).

6. Dispositif suivant la revendication 5, caractérisé en ce que l'extrémité (11) de la fibre optique (7) est disposée dans une prise de courant.

7. Dispositif suivant la revendication 6, caractérisé en ce que dans le module (24, 25) est disposé un dispositif d'amplification (20) pour l'amplification d'un signal optique.

8. Dispositif suivant la revendication 7, caractérisé en ce que le dispositif d'amplification (20) possède un récepteur (21), un amplificateur électronique (22) et un émetteur optique (23).

9. Dispositif suivant la revendication 7, caractérisé en ce que la prise de courant possède un raccord électrique pour l'alimentation du dispositif d'amplification (20).

10. Dispositif suivant la revendication 8, caractérisé en ce que le récepteur (21) et l'émetteur optique (23) du dispositif d'amplification (20) peuvent fonctionner en alternance en tant que récepteur et qu'émetteur optique.

11. Dispositif suivant la revendication 1 ou 2, caractérisé en ce que les signaux optiques peuvent être transmis de manière bilatérale.
